**Europäisches Patentamt**

**European Patent Office**

**Office européen des brevets**

(19)

(11) Veröffentlichungsnummer: **0 208 929**
**B1**

(12) **EUROPÄISCHE PATENTSCHRIFT**

(45) Veröffentlichungstag der Patentschrift:
**14.11.90**

(51) Int. Cl.⁵: **B01J 35/04, B01J 12/00**

(21) Anmeldenummer: **86108175.0**

(22) Anmeldetag: **14.06.86**

(54) Katalysatorfestbettaufbau unter Verwendung wabenförmiger Körper.

(30) Priorität: **19.06.85 DE 3521767**

(43) Veröffentlichungstag der Anmeldung:
**21.01.87 Patentblatt 87/4**

(45) Bekanntmachung des Hinweises auf die Patenterteilung:
**14.11.90 Patentblatt 90/46**

(84) Benannte Vertragsstaaten:
**AT BE CH DE FR GB IT LI NL**

(56) Entgegenhaltungen:
**EP-A- 0 025 308**
**EP-A- 0 073 150**
**FR-A- 1 555 188**
**FR-A- 2 380 072**
**US-A- 3 785 781**
**US-A- 3 887 741**

(73) Patentinhaber: **BASF Aktiengesellschaft,**
**Carl-Bosch-Strasse 38, D-6700 Ludwigshafen(DE)**

(72) Erfinder: **Hoelderich, Wolfgang, Dr., Mannheimer**
**Strasse 18 c, D-6710 Frankenthal(DE)**
Erfinder: **Kroener, Michael, Dr., Eislebener Weg 8,**
**D-6800 Mannheim(DE)**
Erfinder: **Kroetzsch, Peter, Dr., von-Siemens-Strasse 17,**
**D-6834 Ketsch(DE)**
Erfinder: **Biffar, Werner, Dr., Fontanesistrasse 11,**
**D-6710 Frankenthal(DE)**

## Beschreibung

Die Verwendung wabenförmiger Festkörper hat sich in der Vergangenheit ständig erweitert. Sie finden Verwendung als Filter, als Füllmaterial für Waschtürme und Destillationskolonnen, als Hitzeschilder u.a.m.. Auch in der heterogenen Katalyse wurden Wabenkörper bereits erfolgreich eingesetzt, z.B. zur Entgiftung von Verbrennungsabgasen und zur katalytischen Nachverbrennung.

Der Verwendung von wabenförmigen Festkörpern dieser Art sind dagegen bei katalytischen Reaktionen engere Grenzen gesetzt. Durch die parallele Führung der inneren Kanäle zur Körperlängsachse werden sowohl Stoff- als auch Wärmeaustausch weitgehend behindert. Somit beschränkten sich die bisherigen Anwendungen wabenförmiger Katalysatoren auf Reaktionen, die ohne größere Wärmetönung oder bei sehr hoher Verdünnung der Reaktionskomponenten ablaufen, wobei eine homogene Durchmischung des Reaktionsmediums vor Eintritt in das Wabenkörperfestbett vorausgesetzt ist.

Auch für viele katalytische Reaktionen mit hoher exo- oder endothermer Wärmetönung wäre der Einsatz von Wabenkörpern in kinetischer, mechanischer oder konstruktiver Hinsicht vorteilhaft. Die Problematik des Stoff- und insbesondere des Wärmeaustauschs hat aber bisher den Fachmann vom Einsatz von wabenförmigen Festkörpern abgehalten.

In der US-A-3 785 781 ist ein katalytischer Konverter beschrieben, in dem wabenförmige Strukturen mit einer unterschiedlichen Anzahl von Kanälen alternierend angeordnet sind, un eine über den Querschnitt begrenzte Rückmischung des flüssigen oder gasförmigen Reaktionsmediums zu erzwingen.

Die Erfindung betrifft einen Katalysatorfestbettaufbau unter Verwendung wabenförmiger Körper für exo- und endotherme chemische Reaktionen mit hoher Wärmetönung, wobei der erforderliche Wärmeaustausch sowohl in der Flüssigphase als auch in der Gasphase im Katalysatorfestbett durch statische Mischelemente zwischen einzelnen Wabenkörperelementen erzwungen wird.

Überraschend werden die oben angeführten Probleme des Stoff- und Wärmeaustauschs bei exo- und endothermen Reaktionen mit starker Wärmetönung bei einem Katalysatorfestbettaufbau mit alternierender Anordnung von wabenförmigen Körpern, mit parallel zueinander in Richtung der Längsachse verlaufenden Kanälen, und statischen Mischern dadurch gelöst, daß die statischen Mischer aus Körpern mit schräg zur zentralen Achse verlaufenden den Kanälen bestehen, wodurch die vor der Mischzone zu der Reaktorwand strömenden Gase in das Innere des nachfolgenden Wabenkörpers gelenkt und die entlang der Reaktorachse strömenden Gase nach außen an die Reaktorwand geleitet werden.

Man kann Mischelemente aus keramischem und/oder metallischem Inertmaterail einsetzen. Man kann Wabenkörper aus Katalysatorvollmaterial verwenden oder auch mit Aktivkomponente getränkte Wabenkörper.

Die erfindungsgemäße alternierende Anordnung der Wabenkörper und statischen Mischer ist besonders geeignet bei stark exothermen oder endothermen organischen Reaktionen. Vorteilhaft verwendet man die alternierende Anordnung der Wabenkörper und statischen Mischer bei der Duchführung von Dehydrocyanisierungen, Dehydrierungen, Dehydratisierungen, Hydrierungen, Alkoholabspaltung und Formamidabspaltung.

Es ist zweckmäßig, wenn man bei der erfindungsgemäßen Anordnung durch Einstellung einer optimalen Längenabmessung des Wabenkörpers dem jeweils notwendigen reaktionsspezifischen Wärmetransport Rechnung trägt, d.h. mit zunehmender Wärmetönung der Reaktion kürzere Wabenkörper und/oder mehr statische Mischer einbaut. Das richtige Verhältnis ist empirisch einfach zu ermitteln.

Bei der Herstellung der Wabenkörper geht man z.B. von einer Mischung der aktiven Katalysatorkomponenten sowie ggf. weiterer Zusätze aus. Diese Mischung kann man z.B. mit Wasser, ggf. in Gegenwart von Extrudierhilfsmitteln wie Stärke, Methylcellulose, Graphit, Polyethylenglykole, Polyvinylalkohole, Polyvinylpyrrolidone, Polyacrylester, Stearinsäure und deren Metallsalze, Naphthalin, Ammoniak, Ameisensäure, Oxalsäure oder Salpetersäure, die entweder als porositätsverbessernde Mittel, als Gleitmittel oder als Peptisierungsmittel wirken, verformen oder zunächst kneten und anschließend verformen; bevorzugt wird dabei die Knetung mit anschließender Verformung, insbesondere durch Extrudieren. Die bei der Extrusion erhaltenen Formlinge kann man zunächst bei Temperaturen im Bereich von Raumtemperatur bis 160°C trocknen und danach bei Temperaturen im Bereich von 300 bis 1000°C calcinieren, wobei gegebenenfalls auch eine stufenweise Vorcalcination von Vorteil sein kann.

Die Wabenkörper können in verschiedenen Formen hergestellt und eingebaut werden. Der Querschnitt kann kreisförmig, oval oder polygonal sein. Die Länge kann ein Vielfaches des Querschnitts erreichen. Die Körper sind von einer Vielzahl parallel verlaufender Kanäle durchzogen, deren Querschnitt seinerseits ebenfalls kreisförmig, oval, geschwungen oder eckig sein kann. Entscheidend für einen niedrigen Druckverlust ist der freie Querschnitt der Anströmfläche, der über 40% erreichen soll. Die Festigkeit des Wabenkörpers begrenzt die Größe des freien Querschnittes.

Die äußeren Dimensionen der wabenförmigen Körper erreichen bis zu 150 mm Kantenlänge der Grundfläche bei Quadern und etwa gleichen Durchmesser der Grundfläche bei Zylindern. Die Länge der wabenförmigen Körper über den Grundflächen kann über 1000 mm liegen. Hieraus wird die gewünschte Segmentlänge geschnitten. Die lichte Weite der inneren Kanäle variiert zwischen 0,5 bis 20 mm. Die Stärke der inneren Trennwände liegt üblicherweise zwischen 0,1 und 5 mm.

Als statische Mischer kann man Einbauten verwenden, wie sie allgemein für Destillationskolonnen genutzt werden. Diese Mischelemente bestehen aus keramischen und/oder metallischen Materialien.

Eine wichtiges Merkmal der Erfindung besteht darin, daß die Mischzone selbst, d.h. die Länge der statischen Mischer mit ihren schräg zur zentralen Achse verlaufenden Kanälen so gewählt wird, daß ein vollständiger Stoffaustausch und damit Wärmeaustausch über den Reaktorquerschnitt erfolgt. Hierdurch werden die vor der Mischzone an der Reaktorwand strömenden Gase genau in das Innere des nachfolgenden Wabenkörpers gelenkt und die entlang der Reaktorachse strömenden Gase nach Außen an die Reaktorwand geleitet. Als derartige statische Mischer kann man z.B. Kerapak®-Körper verwenden.

Die nachfolgenden Beispiele veranschaulichen das erfindungsgemäße Verfahren bei der Herstellung von Vinylformamid durch katalytische Dehydrocyanisierung von Formylalaninnitril.

Beispiele

Herstellung des Wabenkörpers

3000 g -FeOOH (Eisengelb), 27,6 g $V_2O_5$, 78 g $CrO_3$, 81 g $WO_3$, 34,5 g $Li_2CO_3$ werden gut miteinander gemischt. Danach wird dieses Gemenge mit 329 g KOH, 168 g Kartoffelstärke und 28 g Methylcellulose gelöst in 1 l $H_2O$ angemaischt und im Kneter 1 h verdichtet. Die plastische Masse wird zu Wabenkörpern extrudiert. Die quadratische Grundfläche des erhaltenen quaderförmigen Körpers hat 5 cm Kantenlänge. Die Länge des Quaders selbst beträgt 12 cm. Die 36 inneren Kanäle haben eine quadratische Stirnfläche mit 6 mm lichter Kantenlänge. Die Stärke der inneren Trennwände weist 1,5 mm auf. Dieser Wabenkörper wird 3 Tage bei Raumtemperatur getrocknet und während 2 h bei ansteigender Temperatur bis 150°C 4 h getrocknet. Anschließend wird der Formkörper 1 h bei 500°C und mit ansteigender Temperatur bis 805°C 1 h calciniert.

Der Katalysator setzt sich zusammen aus 85,47 Gew.% $Fe_2O_3$, 0,88 Gew.% $V_2O_5$, 1,88 Gew.% $Cr_2O_3$, 2,57 Gew.% $WO_3$, 0,44 Gew.% $Li_2O$ und 8,76 Gew.% $K_2O$.

Dehydrocyanisierung

Die Dehydrocyanisierung wird in einem elektrisch beheizten Rohrreaktor aus Edelstahl durchgeführt, dessen Geometrie dem Formkörper angepaßt ist. Der Reaktor ist gefüllt mit 10 × 12 cm langen Wabenkörpern. Jeder Wabenkörper ist durch je einen 5 cm langen statischen Mischer (Kerapak®) vom nächsten Wabenkörper getrennt. Dem Pyrolyserohr ist ein Dünnschichtverdampfer vorgeschaltet. Während der Reaktion werden eine Reaktionstemperatur von 460°C und eine Druck von 30 mbar aufrechterhalten. Die Belastung beträgt 0,8 kg Formylalaninnitril/kg Katalysator x h. Gleichzeitig werden 30 l Luft/h mitgeführt. Es wird ein Umsatz von 97 % und eine Selektivität von 93 % erzielt.

Zum Vergleich wird die Pyrolyse an 10 × 12 cm langen direkt übereinander liegenden Wabenkörpern, wie oben beschrieben, in einem elektrisch beheizten Rohrreaktor aus Edelstahl, dessen Geometrie dem Formkörper angepaßt ist, durchgeführt. Im Gegensatz zu vorher sind aber keine statischen Mischer zwischen die wabenförmigen Festkörper eingebaut. Dem Pyrolyserohr ist ein Dünnschichtverdampfer vorgeschaltet. Während der Reaktion wird eine Reaktionstemperatur von 460°C und ein Druck von 30 mbar aufrechterhalten. Die Belastung beträgt 0,8 kg Formylalaninnitril/kg Katalysator x h. Gleichzeitig werden 30 l Luft/h mitgeführt. Es wird ein Umsatz von 90 % und eine Selektivität von 87 % erzielt.

Patentansprüche

1. Katalysatorfestbettaufbau mit alternierender Anordnung von wabenförmigen Körpern, mit parallel zueinander in Richtung der Längsachse verlaufenden Kanälen, und statischen Mischern, dadurch gekennzeichnet, daß die statischen Mischer aus Körpern mit schräg zur zentralen Achse verlaufenden Kanälen bestehen, wodurch die vor der Mischzone an der Reaktorwand strömenden Gase in das Innere des nachfolgenden Wabenkörpers gelenkt und die entlang der Reaktorachse strömenden Gase nach außen an die Reaktorwand geleitet werden.

2. Katalysatorfestbettaufbau nach Anspruch 1, dadurch gekennzeichnet, daß man Mischelemente aus keramischem und/oder metallischem Inertmaterial einsetzt.

3. Katalysatorfestbettaufbau nach Anspruch 1 oder 2, dadurch gekennzeichnet, daß man Wabenkörper aus Katalysatorvollmaterial oder Wabenkörper, die mit den Aktivkomponenten getränkt sind, einsetzt.

4. Verwendung der Katalysatorfestbettaufbauten nach Anspruch 1 für exotherme und endotherme chemische Reaktionen mit hoher Wärmetönung.

Claims

1. A fixed-bed catalyst structure having an alternating arrangement of honeycomb elements, with channels running parallel to each other in the direction of the longitudinal axis, and static mixers, wherein the static mixers consist of elements with channels running obliquely with respect to the central axis, as a result of which the gases flowing along the reactor wall upstream of the mixing zone are directed into the interior of the downstream honeycomb, and the gases flowing along the reactor axis are directed outward toward the reactor wall.

2. A fixed-bed catalyst structure as claimed in claim 1, wherein mixing elements of inert ceramic or metallic material are used.

3. A fixed-bed catalyst structure as claimed in claim 1 or 2, wherein honeycombs made completely of catalyst material or honeycombs which are impregnated with the active components are used.

4. the use of a fixed-bed catalyst structure as claimed in claim 1 for highly exothermic and endothermic chemical reactions.

Revendications

1. Structure de lit fixe de catalyseur avec une disposition alternante de corps en nid d'abeille, avec des canaux d'écoulement parallèles les uns aux autres dans la direction de l'axe longitudinal, et des mélangeurs statiques, caractérisée en ce que les mélangeurs statiques se composent de corps avec des canaux d'écoulement obliques par rapport à l'axe central, les gaz passant dans la zone de réaction sur la paroi du réacteur étant de ce fait guidés dans l'intérieur du corps en nid d'abeille suivant et les gaz s'écoulant suivant l'axe du réacteur étant de ce fait dirigés vers l'extérieur sur la paroi du réacteur.

2. Structure de lit fixe de catalyseur selon la revendication 1, caractérisée en ce qu'on introduit des éléments de mélange en matériau inerte céramique et/ou métallique.

3. Structure de lit fixe de catalyseur selon la revendication 1, caractérisée en ce qu'on introduit des corps en nid d'abeille totalement en catalyseur ou des corps en nid d'abeille qui sont imbibés des composants actifs.

4. Utilisation des structures de lit fixe de catalyseur selon la revendication 1, pour des réactions chimiques exothermiques et endothermiques avec des quantités de chaleur importantes.